# EUROPÄISCHE PATENTSCHRIFT

(11) **EP 3 242 906 B1**
(45) Veröffentlichungstag und Bekanntmachung des Hinweises auf die Patenterteilung: **14.11.2018**
(21) Anmeldenummer: 16700170.0
(22) Anmeldetag: 07.01.2016
(51) Int. Cl.: C08G 77/04, C08G 77/08

(54) **RAUMTEMPERATURVERNETZENDE SILIKONMASSE MIT VERBESSERTEN FLIESSEIGENSCHAFTEN**
ROOM TEMPERATURE CURING SILICONE COMPOUND WITH IMPROVED FLOW PROPERTIES
MASSE DE SILICONE RÉTICULABLE À TEMPÉRATURE AMBIANTE AYANT DES PROPRIÉTÉS D'ÉCOULEMENT AMÉLIORÉES

(30) Priorität: 08.01.2015 EP 15150524
(43) Veröffentlichungstag der Anmeldung: 15.11.2017
(73) Patentinhaber: Sika Technology AG, 6340 Baar (CH)
(72) Erfinder: FRIEDEL, Manuel, 8048 Zürich (CH); CAMADINI, Anina, 8180 Bülach (CH)
(74) Vertreter: Sika Patent Attorneys
(86) Internationale Anmeldenummer: PCT/EP2016/050199
(87) Internationale Veröffentlichungsnummer: WO 2016/110532

(56) Entgegenhaltungen:
- EP-A1- 2 851 395
- WO-A1-2014/086638
- WO-A1-2014/096566
- DE-A1-102007 037 197

## Beschreibung

### Technisches Gebiet

Die vorliegende Erfindung betrifft das Gebiet der raumtemperaturvernetzenden (RTV) Silikonzusammensetzungen, wie sie insbesondere als Kleb- und Dichtstoffe eingesetzt werden.

### Stand der Technik

Raumtemperaturvernetzende (RTV) Silikonzusammensetzungen sind schon seit längerem bekannt und werden insbesondere als Kleb- und Dichtstoffe in unterschiedlichen Anwendungen eingesetzt. Weit verbreitet sind dabei sowohl einkomponentige, feuchtigkeitshärtende Silikonzusammensetzungen (RTV-1) als auch bei Raumtemperatur vernetzende, zweikomponentige Silikonzusammensetzungen (RTV-2).
Viele Silikonzusammensetzungen vernetzen unter Feuchtigkeitseinfluss mit Kondensationsreaktionen unter Abspaltung von flüchtigen Stoffen, wie zum Beispiel Alkoholen. Solche Zusammensetzungen enthalten deshalb neben den kondensationsvernetzbaren Polymeren sogenannte Vernetzer, die mehrere reaktive Gruppen zur Vernetzung der Polymerketten besitzen. Üblicherweise werden als Vernetzer monomere, tri- und tetrafunktionelle Silanverbindungen eingesetzt. Diese haben aber den Nachteil, dass sie während der Vernetzung grosse Mengen an Alkoholen (oder anderen Spaltprodukten) abspalten und dadurch den Flammpunkt der Zusammensetzungen herabsetzen. Die Spaltprodukte werden als VOC (volatile organic compouds) detektiert, können Geruchsemissionen verursachen und sogar gesundheitsschädlich sein. Ausserdem führt eine grosse Menge flüchtiger Spaltprodukte zu einem Schrumpf der Silikonzusammensetzung während der Aushärtung.
Die Menge an Spaltprodukten (und damit die VOC-Belastung und der Schrumpf) kann verringert werden und der Flammpunkt der Zusammensetzung kann erhöht werden, indem oligomere Siloxane als Vernetzer eingesetzt werden. Solche oligomere Vernetzer sind in der Literatur beschrieben. Allerdings besitzen sie wesentliche Nachteile. Werden sie nämlich mit OHterminierten (hydroxy-terminierten) Polydiorganosiloxanen und üblichen Vernetzungskatalysatoren, insbesondere mit Titanaten, formuliert, so entstehen hochviskose Mischungen die schwierig zu compoundieren und zu applizieren sind.

### Darstellung der Erfindung

Aufgabe der vorliegenden Erfindung ist es daher, eine Silikonzusammensetzung mit niedriger Viskosität und damit verbesserten Fliesseigenschaften bereitzustellen, welche beim Aushärten wenig Spaltprodukte emittiert, dadurch weniger VOC-Belastung erzeugt, einen geringeren Schrumpf aufweist und einen höheren Flammpunkt besitzt.

Überraschenderweise wurde gefunden, dass Silikonzusammensetzungen gemäss Anspruch 1 diese Aufgabe lösen.
Durch den Einsatz eines Vernetzungskatalysators für Polydiorganosiloxane, wobei der Katalysator kein Titanat umfasst und insbesondere mindestens eine Verbindung eines Elementes ausgewählt aus den Gruppen 4, 8, 12, 13 und 15 des Periodensystems der Elemente umfasst, bevorzugt eine Verbindung von Al, Bi, Zn, Zr, oder Fe, und mindestens eines oligomeren Siloxans als Vernetzer für mindestens ein kondensationsvernetzbares Polydiorganosiloxan, ist es möglich, die Auspresskräfte zum Applizieren der Zusammensetzung niedrig zu halten, ohne jedoch die oben beschriebenen Nachteile der Verwendung von monomeren Vernetzern in Kauf nehmen zu müssen.

Erfindungsgemässe Zusammensetzungen eignen sich beispielsweise als elastische Kleb- und Dichtstoffe in den Bereichen Bau und Industrie, insbesondere für Fassadenbau, Isolierglas, Fensterbau, Automotive, Solarpanels und Sanitäranwendungen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine Silikonzusammensetzung umfassend
- mindestens ein kondensationsvernetzbares Polydiorganosiloxan P gemäss Formel (I), 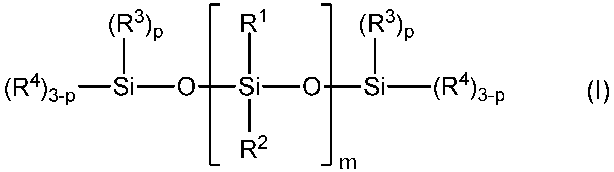 wobei
   die Reste R¹, R² und R³ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen,
   die Reste R⁴ unabhängig voneinander für Hydroxylgruppen oder für Amin-, Alkoxy-, Acetoxy- oder Ketoximgruppen mit jeweils 1 bis 13 C-Atomen stehen, welche gegebenenfalls ein oder mehrere weitere Heteroatome, und gegebenenfalls eine oder mehrere C-C-Mehrfachbindungen und/oder gegebenenfalls cycloaliphatische und/oder aromatische Anteile aufweisen,
   der Index p für einen Wert von 0, 1 oder 2 steht; und
   der Index m so gewählt ist, dass das Polydiorganosiloxan P bei einer Temperatur von 23°C eine Viskosität von 1000 bis 250'000 mPa·s aufweist;
- mindestens ein oligomeres Alkyl-, Alkenyl-, Aryl- oder organofunktionelles Siloxan **S** mit mindestens 2 oder 3 hydrolysierbaren Resten an mindestens einem Siliziumatom, das eine Viskosität bei einer Temperatur von 23°C von 1 bis 200 mPa.s aufweist;
- mindestens einen Katalysator **K** für die Vernetzung von Polydiorganosiloxanen, wobei der Katalysator **K** kein Titanat umfasst und insbesondere mindestens eine Verbindung eines Elementes ausgewählt aus den Gruppen 4, 8, 12, 13 und 15 des Periodensystems der Elemente umfasst, bevorzugt eine Verbindung von Al, Bi, Zn, Zr, oder Fe.

Mit "Poly" beginnende Substanznamen wie beispielsweise Polysiloxan bezeichnen im vorliegenden Dokument Substanzen, die formal zwei oder mehr der in ihrem Namen vorkommenden funktionellen Gruppen pro Molekül enthalten.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Das Polydiorganosiloxan in der erfindungsgemässen Silikonzusammensetzung ist ein Polydiorganosiloxan P der Formel (I). 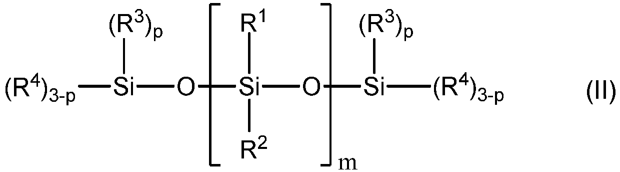 Dabei stehen die Reste R¹, R² und R³ unabhängig voneinander für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen.
Insbesondere stehen die Reste R¹ und R² für Alkylreste mit 1 bis 5, insbesondere mit 1 bis 3, C-Atomen, bevorzugt für Methylgruppen. Die Reste R³ stehen unabhängig voneinander insbesondere für Phenyl-, Vinyl oder für Methylgruppen.
Die Reste R⁴ stehen unabhängig voneinander für Hydroxylgruppen oder für Alkoxy-, Acetoxy- oder Ketoximgruppen mit jeweils 1 bis 13 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen.
Der Index p steht für einen Wert von 0, 1 oder 2, insbesondere für 0 oder 1. Weiterhin ist der Index m so gewählt, dass das Polydiorganosiloxan P bei einer Temperatur von 23°C eine Viskosität von 1000 bis 250'000 mPa·s aufweist.
Das Polydiorganosiloxan **P** ist ein kondensationsvernetzbares Polydiorganosiloxan, das heisst es vernetzt unter Einfluss von Feuchtigkeit durch Abspaltung eines Spaltproduktes. Das Spaltprodukt ist abhängig von der Art der Reste R⁴ beziehungsweise der weiter unten beschriebenen Reste XR⁶ und kann beispielsweise ein Alkohol, ein Amin, oder Essigsäure sein.
Stehen die Reste R⁴ für Ketoximgruppen, handelt es sich vorzugsweise um Ketoximgruppen mit jeweils 1 bis 13 C-Atomen und der Index p steht insbesondere für einen Wert von 0.
Bevorzugte Ketoximgruppen sind dabei Dialkylketoximgruppen deren Alkylgruppen jeweils 1 bis 6 C-Atome aufweisen. Vorzugsweise stehen die beiden Alkylgruppen der Dialkylketoximgruppen unabhängig voneinander für Methyl-, Ethyl-, n-Propyl-, iso-Propyl-, n-Butyl- oder iso-Butylgruppen. Besonders bevorzugt sind diejenigen Fälle, in denen eine Alkylgruppe des Dialkylketoxims für eine Methylgruppe steht und die andere Alkylgruppe des Dialkylketoxims für eine Methyl-, Ethyl-, n-Propyl- oder für eine iso-Butylgruppe steht. Meist bevorzugt steht die Ketoximgruppe für eine Ethyl-methylketoximgruppe. Bevorzugt stehen die Reste R⁴ für Hydroxylgruppen oder Alkoxygruppen und/oder der Index p für einen Wert von 2.

Geeignete Polydiorganosiloxane, wie sie insbesondere in Formel (I) dargestellt sind, sind bekannt und kommerziell erhältlich. Auch die Herstellung derartiger Polydiorganosiloxane erfolgt in bekannter Art und Weise, wie beispielsweise beschrieben in EP 0881248.

Weiterhin umfasst die vorliegende Zusammensetzung mindestens ein oligomeres Siloxan **S** als Vernetzer für das kondensationsvernetzbare Polydiorganosiloxan **P.**

Oligomere Siloxane **S** im Sinne der vorliegenden Erfindung werden durch die Formel (II) beschreiben, wobei die Siloxane auch verzweigt sein können und/oder Ringstrukturen aufweisen können.

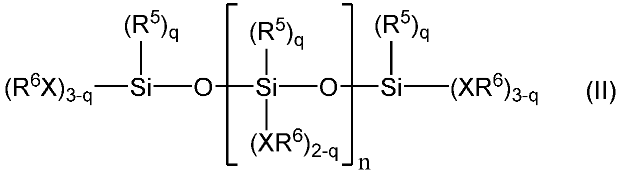

Dabei steht der Rest R⁵ unabhängig voneinander für einen linearen oder verzweigten, Kohlenwasserstoffrest mit 1 bis 12 C-Atomen, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist.
X steht für ein Heteroatom, insbesondere für O oder N. Ist X gleich N, so trägt dieses N neben R⁶ zusätzlich ein Wasserstoffatom oder eine Alkylgruppe, insbesondere eine Alkylgruppe mit 1 bis 5, insbesondere mit 1 bis 3, C-Atomen, bevorzugt eine Methylgruppe. Der Rest R⁶ steht unabhängig voneinander für ein Wasserstoffatom, oder für einen Alkylrest mit 1 bis 12 C-Atomen, oder für einen Ketiminrest mit 1 bis 13 C-Atomen, oder für einen Acylrest mit 1 bis 12 C-Atomen. Insbesondere steht der Rest R⁶ für einen Alkylrest mit 1 bis 5, insbesondere 1 bis 3, C-Atomen, bevorzugt für eine Methyl- oder Ethylgruppe.
Der Index q steht für einen Wert von 0 oder 1, bevorzugt für einen Wert von 1. Weiterhin ist der Index n so gewählt, dass das oligomere Siloxan S bei einer Temperatur von 23°C eine Viskosität von 0.7 bis 200 mPa·s, aufweist.
Das oligomere Siloxan **S** ist ein Kondensationsprodukt von einem oder mehreren monomeren Silanen der Formel (III). 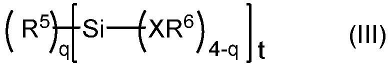 Dabei haben die Reste R⁵, R⁶, X und index q dieselbe Bedeutung wie weiter oben beschrieben. Der Index t steht für einen Wert von 1, 2 oder 3, insbesondere 1 oder 2.
Für die Herstellung des oligomeren Siloxans **S** können verschiedene monomere Silane der Formel (III) verwendet werden. Das aus der teilweisen Kondensation der monomeren Silane resultierende oligomere Siloxan **S** kann dabei linear aufgebaut sein, wie in Formel (II) beschrieben, oder es kann Ringstrukturen bilden oder verzweigt sein. Selbstverständlich können auch Mischungen aus verschiedenen Strukturen entstehen.
Beispiele geeigneter Silane der Formel (III) zur Herstellung eines erfindungstauglichen oligomeren Siloxans **S** sind Methyltrimethoxysilan, Chlormethyltrimethoxysilan, Ethyltrimethoxysilan, Propyltrimethoxysilan, Vinyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetra-n-propoxysilan, Tetra-n-butoxysilan, 2-Aminoethyl-3-aminopropyltrimethoxysilan, 2-Aminoethyl-3-aminopropyltriethoxysilan, N-Phenylaminomethyltrimethoxysilan, 3-Glycidoxypropyltrimethoxysilan, Bis-(N-methylacetamido)methylethoxysilan, Tris-(methylethylketoximo)methylsilan, Tris-(methylethylketoximo)vinylsilan, Tris-(methylethylketoximo)phenhylsilan, N,N-Bis-(triethoxysilylpropyl)amin, N,N-Bis-(trimethoxysilylpropyl)amin, oder 1,2-Bis-(triethoxysilyl)ethan.
Besonders bevorzugt handelt es sich beim Silan der Formel (III) um Vinyltrimethoxysilan oder Tetraethoxysilan oder deren Mischung. Die organischen Funktionalitäten und strukturellen Eigenschaften der monomeren Silane sind dann teilweise oder ganz auch im oligomeren Siloxan **S** vorhanden und können sich positiv auf Eigenschaften wie Haftung auf bestimmten Untergründen auswirken.

Weiterhin können die Silane zur Herstellung des oligomeren Siloxans **S**, sowie das resultierende oligomere Siloxan **S** selber auch bereits teilweise (ein Teil aller R⁶ = H) oder vollständig hydrolysiert (alle R⁶ = H) vorliegen.

Beispielsweise sind geeignete oligomere Siloxane **S** Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan und Decaethoxytetrasiloxan, sowie mit den weiter oben beschriebenen Resten R⁵ substituierte Derivate davon. Bevorzugte Reste R⁵ sind dabei Aminopropylgruppen, Glycidylgruppen, Vinylgruppen, Phenylgruppen, sowie Mischungen davon.
Der Anteil des oligomeren Siloxans **S** als Vernetzer für Polydiorganosiloxan **P** beträgt vorzugsweise 0.1 bis 15 Gewichtsteile, insbesondere 0.5 bis 10 Gewichtsteile, bevorzugt 1 bis 8 Gewichtsteile, bezogen auf 100 Gewichtsteile Polydiorganosiloxan **P** in der gesamten Silikonzusammensetzung.

Die erfindungsgemässe Silikonzusammensetzung umfasst weiterhin mindestens einen Katalysator **K** für die Vernetzung von Polydiorganosiloxanen, wobei der Katalysator **K** kein Titanat umfasst und insbesondere mindestens eine Verbindung eines Elementes ausgewählt aus den Gruppen 4, 8, 12, 13 und 15 des Periodensystems der Elemente umfasst, bevorzugt eine Verbindung von Al, Bi, Zn, Zr, oder Fe. Besonders bevorzugt sind Verbindungen von Bi, Zn und Zr. Am meisten bevorzugt ist Bismut. Ein Katalysator für die Vernetzung von Polydiorganosiloxanen ist in der Lage, die Hydrolyse und/oder Kondensation von hydrolysierbaren und/oder hydrolysierten Silanen, Siloxanen und Polysiloxanen zu katalysieren. Diese Reaktionen führen in den Silikonzusammensetzungen wie in der vorliegenden Erfindung beschrieben zu einer Vernetzung der Polydiorganosiloxanketten mit Hilfe der enthaltenen Vernetzer. Dabei kann es sich bei den als Katalysator geeigneten Verbindungen zum Beispiel um organische Moleküle handeln, wie etwa basische Heterozyklen, oder um Metallkomplexe.

Besonders bevorzugte solche Verbindungen sind Komplexe, insbesondere von Bismut, und weisen Liganden auf, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe, wobei alle Liganden identisch oder verschieden voneinander sein können.
Als Alkoxygruppen haben sich insbesondere so genannte Neoalkoxy-Substituenten, beispielsweise ein 2,2-Bis((Allyloxy)methyl)butoxy-Substituent, als besonders geeignet erwiesen.
Als Sulfonsäuren haben sich insbesondere aromatische Sulfonsäuren, deren Aromaten mit einer Alkylgruppe substituiert sind, als besonders geeignet erwiesen.
Besonders geeignet als Carboxylatgruppen haben sich insbesondere Carboxylate von Fettsäuren erwiesen. Als bevorzugtes Carboxylat gelten Octoat, Decanoat, Neodecanoat, Stearat und Isostearat.
Insbesondere bevorzugt sind Carboxylatkomplexe der obengenannten Elemente. Am meisten bevorzugt sind Bismutcarboxylate. Die Bismutcarboxylate sind aus Bi(III)-Verbindungen mit den organischen Säuren R-COOH nach den literaturbekannten Verfahren herstellbar oder als handelsübliche Produkte unter den jeweiligen Markennamen erhältlich, wie Bismuttrioctoat oder Bismuttrineodecanoat, beispielsweise unter den Markennamen Borchi® Kat (Fa. Borchers GmbH) oder Tegokat® (Fa. Goldschmidt TIB GmbH), Neobi® 200, Fa. Shepherd, Coscat®, Fa. Caschem. Weiterhin geeignete Bismutate sind beispielsweise erhältlich unter dem Handelsnamen K-Kat 348 und K-Kat XC-8203 von der Firma King Industries.

Geeignete Zirkonate, zum Beispiel Zirconiumoctoat, sind beispielsweise unter den Handelsnamen Tyzor® NBZ, NPZ, TEAZ, 212, 215, 217, 223 kommerziell erhältlich von der Firma Dorf Ketal oder unter den Handelsnamen K-Kat 4205 oder K-Kat XC-6212 von der Firma King Industries oder unter dem Handelsnamen TIB KAT 816 von der Firma TIB Chemicals.
Ein geeignetes Aluminat ist beispielsweise erhältlich unter dem Handelsnamen K-Kat 5218 von der Firma King Industries.
Geeignete Zinkverbindungen wie beispielsweise Zinkoctoat oder Zinkneodecanoat sind beispielsweise erhältlich unter den Handelsnamen TIB KAT 616 und TIB KAT 620 von der Firma TIB Chemicals oder unter dem Handelsnamen Borchi® Kat 15 (Fa. Borchers GmbH).

Selbstverständlich ist es möglich oder in gewissen Fällen sogar bevorzugt, Mischungen verschiedener Komplexe eines Elements ausgewählt aus den Gruppen 4, 8, 12, 13 und 15 des Periodensystems der Elemente als Katalysator **K** einzusetzen. Es kann auch bevorzugt sein, mindestens einen Komplex mit organischen Katalysatoren, wie z.B. Aminen, zu kombinieren.

Der Gewichtsanteil an Katalysator **K** beträgt vorzugsweise 0.1 bis 6 Gewichtsteile, insbesondere 0.5 bis 5 Gewichtsteile, bevorzugt 1 bis 3 Gewichtsteile, bezogen auf 100 Gewichtsteile Polydiorganosiloxan P in der gesamten Silikonzusammensetzung.

Die erfindungsgemässe Silikonzusammensetzung umfasst weiterhin bevorzugt mindestens einen Füllstoff.
Als Füllstoff geeignet sind alle dem Fachmann im Gebiet der Formulierung von Silikonzusammensetzungen bekannten Füllstoffe. Zu den geeigneten Füllstoffen gehören insbesondere Kreide (Calciumcarbonat), Kieselsäure (Silica), Aluminiumoxide und/oder-hydroxide, Industrieruss, Bariumsulfat

(Schwerspat), Dolomit, Tonerden, Silikate wie z.B. Quarzmehl, Kaolinit, Talk, Diatomeenerde oder Glasmehl und Hohlkörper wie Glaskugeln.

Bevorzugt als Füllstoff geeignet ist Calciumcarbonat, z.B. in Form von Kalkstein, Kreidegestein, Muschelkalk oder Marmor. Dabei kann das Calciumcarbonat aus natürlichen Vorkommen, beispielsweise Marmorbrüchen, gewonnen oder mit bekannten Verfahren, beispielsweise Fällungsreaktionen, hergestellt worden sein. Natürliches Calciumcarbonat kann Anteile an weiteren Mineralien, z.B. Magnesiumcarbonat enthalten. Weiter kann das Calciumcarbonat gemahlen sein und es kann unbehandelt oder modifiziert, insbesondere oberflächenbehandelt, also hydrophobiert, vorliegen. Die Oberflächenbehandlung kann beispielsweise durch Behandlung mit Fettsäuren, insbesondere Stearaten, bevorzugt mit Calciumstearat, erfolgen. Selbstverständlich können auch Mischungen verschiedener Calciumcarbonaten eingesetzt werden.
Bevorzugt umfasst die erfindungsgemässe Silikonzusammensetzung mindestens eine Kreide, insbesondere mindestens eine gemahlene Kreide mit einer BET-Oberfläche von 1 bis 10 m²/g und einer mittleren Teilchengrösse d50 von 1 bis 10 µm.
Die Angabe der Teilchengrösse d50 bezieht sich dabei darauf, dass 50 Gew.-% der Teilchen eine Grösse aufweisen, welche gleich oder kleiner ist als der angegebene Wert. Die Teilchengrösse d50 kann typischerweise durch Laserlichtstreuung in Anlehnung an die Norm ISO 13320:2009, beispielsweise mit dem Gerät CILAS 920 der Firma CILAS bestimmt werden.

Ein weiterer bevorzugter Füllstoff ist Kieselsäure, insbesondere mit einer BET-Oberfläche von 50 bis 300 m²/g, bevorzugt von 100 bis 250 m²/g.
Geeignete Kieselsäuren sind gefällte oder pyrogene Kieselsäuren, die oberflächenhydrophobiert sein können oder die unbehandelt, d.h. hydrophil, vorliegen können.
Als hydrophobierte Kieselsäuren eignen sich typischerweise silikonisierte und/oder silanisierte Kieselsäuren, welche dann einen Kohlenstoffgehalt von 0.6 bis 6.5 Gew.-% bezogen auf das Gesamtgewicht der Kieselsäure aufweisen. Geeignete Kieselsäuren können aber auch nicht behandelt, also hydrophil, vorliegen. Es können weiterhin auch Mischungen verschiedener Kieselsäuren eingesetzt werden.

Der mindestens eine Füllstoff der in bevorzugten Ausführungsformen vorhanden ist beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Es ist möglich und in bevorzugten Ausführungsformen sogar vorteilhaft, verschiedene Füllstoffe in der erfindungsgemässen Silikonzusammensetzung zu kombinieren.

Eine Gesamtmenge an Füllstoff in bevorzugten Ausführungsformen der erfindungsgemässen Silikonzusammensetzung liegt typischerweise im Bereich von 1 bis 80 Gew.-%, bevorzugt 2 bis 60 Gew.-%, besonders bevorzugt 5 bis 50 Gew.-%, bezogen auf das Gesamtgewicht der Zusammensetzung .

Die erfindungsgemässe Silikonzusammensetzung kann gegebenenfalls noch weitere Bestandteile enthalten.
Derartige zusätzliche Bestandteile sind insbesondere Hilfsstoffe, wie beispielsweise Haftvermittler, Verarbeitungshilfsmittel, Verlaufsmittel, Stabilisatoren, Farbstoffe, Pigmente, Weichmacher, Duftstoffe, Biozide, Thixotropierungsmittel, Rheologiemodifikatoren, Phosphate, Inhibitoren, Hitzestabilisatoren, Antistatika, Flammschutzmittel, Radikalfänger, Wachse und weitere, dem Fachmann bekannte gängige Rohstoffe und Additive.
Von solchen Hilfsstoffen können mehrere oder alle oben genannten oder weitere, ungenannte in der erfindungsgemässen Silikonzusammensetzung enthalten sein, und jeder einzelne der zusätzlich enthaltenen Hilfsstoffe ist bevorzugt mit einem Anteil von weniger als 25 Gewichtsteilen, besonders bevorzugt weniger als 15 Gewichtsteilen, am meisten bevorzugt weniger als 10 Gewichtsteilen, bezogen auf 100 Gewichtsteile Polydiorganosiloxan **P** in der Zusammensetzung, enthalten.

Beim Einsatz von derartigen optionalen Bestandteilen ist es vorteilhaft, alle genannten, in der Silikonzusammensetzung gegebenenfalls vorhandenen, Bestandteile so auszuwählen, dass die Lagerstabilität der Silikonzusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Silikonzusammensetzung führende Reaktionen während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Geeignete Weichmacher für die erfindungsgemässe Silikonzusammensetzung sind insbesondere trialkylsilylterminierte Polydialkylsiloxane, insbesondere trimethylsilylterminierte Polydimethylsiloxane. Bevorzugt sind trimethylsilylterminierte Polydimethylsiloxane mit Viskositäten zwischen 1 und 10'000 mPa·s. Besonders bevorzugt sind Viskositäten zwischen 10 und 1'000 mPa·s. Es können jedoch auch trimethylsilylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Obwohl besonders bevorzugt lineare trimethylsilylterminierte Polydimethylsiloxane als Weichmacher eingesetzt werden, können auch solche Verbindungen verwendet werden, die verzweigt sind. Es ist auch möglich anstatt der Polysiloxan-Weichmacher, organische Verbindungen, wie zum Beispiel bestimmte Kohlenwasserstoffe oder deren Gemische, als Weichmacher einzusetzen. Derartige Kohlenwasserstoffe können aromatisch oder aliphatisch sein. Bei der Auswahl ist insbesondere darauf zu achten, dass diese Kohlenwasserstoffe eine geringe Flüchtigkeit und eine hinreichende Verträglichkeit mit den übrigen Bestandteilen der Silikonzusammensetzung aufweisen.

Der Anteil des Weichmachers beträgt vorzugsweise 2 bis 15 Gew.-%, insbesondere 5 bis 10 Gew.-%, der gesamten Silikonzusammensetzung.

Besonders geeignet als Haftvermittler sind Alkoxysilane, welche vorzugsweise mit funktionellen Gruppen substituiert sind. Die funktionelle Gruppe ist beispielsweise eine Aminopropyl-, Glycidoxypropyl- oder Mercaptopropylgruppe. Bevorzugt sind aminofunktionelle Gruppen. Bei den Alkoxygruppen derartiger Silane handelt es sich meist um eine Methoxy- oder Ethoxygruppe. Besonders bevorzugt sind 3-Aminopropyltrimethoxysilan, 3-Aminopropyltriethoxysilan, 3-(2-Aminoethyl)-aminopropyltriethoxysilan, 3-Glycidoxypropyltrimethoxysilan, 3-Glycidoxypropyltriethoxysilan und 3-Mercaptopropyltriethoxysilan. Es ist auch möglich, ein Gemisch von Haftvermittlern einzusetzen. Weiterhin eignen sich als Haftvermittler beispielsweise auch aminofunktionelle Alkylsilsesquioxane wie aminofunktionelles Methylsilsesquioxan oder aminofunktionelles Propylsilsesquioxan, alkoxylierte Alkylenamine, insbesondere ethoxylierte und/oder propoxylierte Alkylendiamine, sowie weitere, insbesondere substituierte, Oligomere, Polymere oder Copolymere auf Basis von Polyalkylenglykolen.
Es ist dem Fachmann klar, dass bei der Verwendung von Silanen als Haftvermittler die Möglichkeit besteht, dass diese je nach Bedingungen, beispielsweise bei Feuchtigkeit, teilweise oder vollständig hydrolysiert vorliegen können. Weiterhin ist dem Fachmann bekannt, dass es bei der Anwesenheit solcher teilweise oder vollständig hydrolysierten Silane durch Kondensationsreaktionen zur Bildung von oligomeren Siloxanen, insbesondere zu Dimeren und/oder Trimeren kommen kann.

Der Anteil des allfällig vorhandenen Haftvermittlers beträgt vorzugsweise 0.1 bis 15 Gew.-%, insbesondere 1 bis 10 Gew.-%, bevorzugt 1 bis 5 Gew.-%, der gesamten Silikonzusammensetzung.

Die erfindungsgemässe Silikonzusammensetzung kann als einkomponentige oder als zweikomponentige Zusammensetzung ausgebildet sein.

Handelt es sich um eine einkomponentige Silikonzusammensetzung ist sie insbesondere so beschaffen, dass sie unter Einfluss von Wärme oder von Feuchtigkeit vernetzt. Meist bevorzugte einkomponentige Silikonzusammensetzungen vernetzen bei Raumtemperatur unter dem Einfluss von Feuchtigkeit, insbesondere von Luftfeuchtigkeit, wobei die Vernetzung durch Kondensation von Silanolgruppen unter Bildung von Siloxanbindungen erfolgt.
Im Falle einer einkomponentigen erfindungsgemässen Silikonzusammensetzung ist die Silikonzusammensetzung bevorzugt so formuliert, dass sie nach Lagerung während 12 h bei 23 °C in einer Kunststoffkartusche beim Auspressen durch eine Düse mit 3 mm Innendurchmesser und einer Auspressgeschwindigkeit von 60 mm/min eine Auspresskraft von zwischen 300 N und 1300 N, bevorzugt 400 N und 1200 N, besonders bevorzugt zwischen 500 N und 1000 N, benötigt.

Handelt es sich bei der Silikonzusammensetzung um eine zweikomponentige Zusammensetzung, so ist sie insbesondere eine zweikomponentige Silikonzusammensetzung bestehend aus einer Komponente **A** und einer Komponente **B**, wobei das Polydiorganosiloxan **P**, das oligomere Siloxan **S** als Vernetzer und der Katalysator **K** so auf die beiden Komponenten aufgeteilt werden, dass die Vernetzungsreaktion erst beim oder nach dem Mischen der beiden Komponenten einsetzt.
Insbesondere besteht eine erfindungsgemässe zweikomponentige Silikonzusammensetzung aus einer Komponente **A** umfassend
- das mindestens eine kondensationsvernetzbare Polydiorganosiloxan **P** gemäss der Beschreibung weiter oben,
- bevorzugt mindestens eine Kieselsäure mit einer BET-Oberfläche von 50 bis 300 m²/g, sowie
- bevorzugt mindestens eine Kreide mit einer BET-Oberfläche von 1 bis 10 m²/g und einer mittleren Teilchengrösse d50 von 1 bis 10 µm;
und einer Komponente **B** umfassend
- das mindestens eine oligomere Alkyl-, Alkenyl-, Aryl- oder organofunktionelle Siloxan **S** wie weiter oben beschrieben,
- den mindestens einen Katalysator **K** wie weiter oben beschrieben.

Sowohl Komponente **A** als auch Komponente **B** der beschriebenen zweikomponentigen Silikonzusammensetzung werden unter Ausschluss von Feuchtigkeit hergestellt und aufbewahrt. Getrennt voneinander sind die beiden Komponenten lagerstabil, d.h., sie können in einer geeigneten Verpackung oder Anordnung über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändern. Üblicherweise wird die Lagerstabilität über die Messung der Viskosität oder der Reaktivität über die Zeit ermittelt.

Bei der Applikation der zweikomponentigen Silikonzusammensetzung werden die Komponenten **A** und **B**, beispielsweise durch Rühren, Kneten, Walzen oder dergleichen, insbesondere jedoch über einen Statikmischer, miteinander vermischt, wobei es zur Aushärtung der Zusammensetzung kommt. Die Aushärtung der zweikomponentigen Silikonzusammensetzung erfolgt insbesondere bei Raumtemperatur.

Handelt es sich bei der erfindungsgemässen Silikonzusammensetzung um eine zweikomponentige Silikonzusammensetzung, wird diese insbesondere so eingesetzt, dass das Gewichtsverhältnis der Komponente **A** zur Komponente **B** ≥ 1:1, insbesondere von 3:1 bis 15:1, bevorzugt von 10:1 bis 13:1, beträgt.

Bei der Vernetzung der Silikonzusammensetzung entstehen als Reaktionsprodukte der Kondensationsreaktion insbesondere auch Verbindungen der Formel H-R⁴, wobei R⁴ bereits vorhergehend beschrieben wurde. Bevorzugt handelt es sich bei diesen Nebenprodukten der Kondensationsreaktion um Verbindungen, welche weder die Zusammensetzung noch das Substrat, auf dem die Zusammensetzung appliziert wird beeinträchtigen. Meist bevorzugt handelt es sich beim Reaktionsprodukt der Formel H-R⁴ um eine Verbindung, welche sich leicht aus der vernetzenden oder der bereits vernetzten Zusammensetzung verflüchtigt.

Weiterhin betrifft die vorliegende Erfindung die Verwendung einer Silikonzusammensetzung, wie sie vorhergehend beschrieben worden ist, als Klebstoff, Dichtstoff, Beschichtung oder als Gussmasse.

Insbesondere eignet sich die erfindungsgemässe Silikonzusammensetzung zum Verkleben, Abdichten oder Beschichten von Substraten, welche ausgewählt sind aus der Gruppe bestehend aus Beton, Mörtel, Backstein, Ziegel, Keramik, Gips, Naturstein wie Granit oder Marmor, Glas, Glaskeramik, Metall oder Metalllegierung wie Aluminium, Stahl, Buntmetall, verzinktes Metall, Holz, Kunststoff wie PVC, Polycarbonat, Polymethyl(meth)acrylat, Polyester, Epoxidharz, Farbe und Lack.

Bevorzugt wird die Silikonzusammensetzung im Baubereich, insbesondere im Fenster- und Fassadenbau, verwendet.

Weiterhin betrifft die vorliegende Erfindung eine gehärtete Silikonzusammensetzung erhältlich aus einer einkomponentigen Silikonzusammensetzung gemäss vorhergehender Beschreibung, insbesondere durch Reaktion mit Feuchtigkeit, oder aus einer ebenfalls vorhergehend beschriebenen zweikomponentigen Silikonzusammensetzung durch Mischen der Komponente **A** mit der Komponente **B**.

Weiterhin betrifft die vorliegende Erfindung die Verwendung mindestens eines oligomeren Alkyl-, Alkenyl-, Aryl- oder organofunktionellen Siloxans **S** mit mindestens 2 oder 3 hydrolysierbaren Resten an mindestens einem Siliziumatom als Vernetzer in einer Silikonzusammensetzung in Kombination mit mindestens einem Katalysator **K** für die Vernetzung von Polydiorganosiloxanen, wobei der Katalysator **K** kein Titanat umfasst und insbesondere mindestens eine Verbindung eines Elementes ausgewählt aus den Gruppen 4, 8, 12, 13 und 15 des Periodensystems der Elemente umfasst, bevorzugt eine Verbindung von Al, Bi, Zn, Zr, oder Fe.

Es ist ein besonderer Vorteil der vorliegenden Erfindung, dass nunmehr die Formulierung von ein- und zweikomponentigen Silikonzusammensetzungen mit im Vergleich zum Stand der Technik verbesserten Fliesseigenschaften, vor allem bedingt durch niedrigere Viskosität möglich ist, wobei gleichzeitig der Flammpunkt der Silikonzusammensetzungen erhöht wird und der Schrumpf während dem oder nach dem Aushärten vermindert wird.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
Die Bezeichnung "Raumtemperatur" oder "Normtemperatur" bezeichnet, sofern nichts anderes erwähnt, eine Temperatur von 23 °C. Die Abkürzung "%r.h." bedeutet relative Luftfeuchtigkeit (in Prozent) der Umgebungsluft bei einer angegebenen Temperatur. Die Begriffe "Masse" und "Gewicht" werden in diesem Dokument gleichbedeutend verwendet. Die Abkürzung "phr" bedeutet "parts per hundred rubber" und bezeichnet in diesem Dokument Gewichtsteile eines Bestandteils, bezogen auf 100 Gewichtsteile Polydiorganosiloxan **P**.

### Herstellung der Silikonzusammensetzungen

### Verwendete Rohstoffe:

OH-terminiertes Polydimethylsiloxan (PDMS) der Viskosität 80 Pa·s kann unter dem Handelsnamen Polymer FD 80 von der Firma Wacker bezogen werden. (CH₃)₃Si-terminiertes PDMS der Viskosität 100 mPa·s kann unter dem Handelsnamen Silikonöl AK 100 von der Firma Wacker bezogen werden. Natürliche, gemahlene Kreide kann unter den Handelsnamen Calcilit® oder Calciplast® von der Firma Alpha-Calcit oder unter dem Handelsnamen Omyacarb® von der Firma Omya oder unter dem Handelsnamen Carbital® von der Firma Imerys bezogen werden. Pyrogene Kieselsäuren können unter dem Handelsnamen Cabosil® von der Firma Cabot oder unter dem Handelsnamen Aerosil® von der Firma Evonik oder unter dem Handelsnamen HDK® von der Firma Wacker bezogen werden. Silane, wie monomeres Vinyltrimethoxysilan und oligomere Siloxane, wie oligomeres Vinyltrimethoxysilan können unter den Handelsnamen Dynasylan® von der Firma Evonik oder unter dem Handelsnamen Geniosil® von der Firma Wacker bezogen werden. Diisobutoxy-bis(ethylacetoacetato)titanat kann unter dem Handelsnamen Tyzor® IBAY von der Firma DorfKetal bezogen werden, Bismuthcarboxylat kann unter dem Handelsnamen Dabco® MB20 von der Firma Air Products & Chemicals bezogen werden. Zirconiumoctoat kann unter dem Handelsnamen TIB KAT 816 von der Firma TIB Chemicals bezogen werden. Zinkneodecanoat kann unter dem Handelsnamen Borchi® Kat 15 von der Firma Borchers GmbH bezogen werden.

Für die Herstellung der erfindungsgemässen Silikonzusammensetzungen E1 bis E4, sowie für die nicht erfindungsgemässen Referenzzusammensetzungen R1 bis R6 wurden die in Tabelle 1 aufgeführten Bestandteile in den angegebenen Gewichtsteilen in einem Dissolver bei Raumtemperatur unter Inertatmosphäre miteinander vermischt und eingerührt, bis eine makroskopisch homogene Paste erhalten wurde.
Die hergestellten Silikonzusammensetzungen wurden in Kartuschen abgefüllt, luftdicht verschlossen gelagert und nach den in Tabelle 2 oder unter der Beschreibung der Messmethoden angegebenen Zeiten für die Messungen vorbereitet.

**Tabelle 1: Erfinderische Beispielzusammensetzungen (E1 bis E4) und nicht erfinderische Referenzzusammensetzungen (R1 bis R6). Alle Angaben in Gewichtsteilen bezogen auf 100 Gewichtsteile Polydiorganosiloxan P (phr).**

| **Zusammensetzung** | **R1** | **R2** | **R3** | **E1** | **R4** | **R5** | **R6** | **E2** | **E3** | **E4** |
|---|---|---|---|---|---|---|---|---|---|---|
| *Polydiorganosiloxan **P*** (OH-terminiertes PDMS, 80'000 mPa·s) | 100 | 100 | 100 | 100 | 100 | 100 | 100 | 100 | 100 | 100 |
| Trimethylsilylterminiertes PDMS, 100 mPa·s | 25 | 25 | 25 | 25 | 25 | 25 | 25 | 25 | 25 | 25 |
| Vinyltrimethoxysilan | 5 | - | 5 | - | 5 | - | 5 | - | 1 | - |
| *Oligomeres Siloxan **S*** (oligomeres Vinyltrimethoxysilan, 54w% SiO₂, ca 3 mPa·s) | - | 5 | - | 5 | - | 5 | - | 5 | 4 | 5 |
| hydrophile Flammkieselsäure, BET: 150 m²/g | 10 | 10 | 10 | 10 | 10 | 10 | 10 | 10 | 8 | 10 |
| Gemahlene Kreide, unbehandelt, d50: 2µm | 90 | 90 | 90 | 90 | 90 | 90 | 90 | 90 | 90 | 90 |
| Diisobutoxy-bis(ethylaceto-acetato)titanat | 3 | 3 | - | - | 1 | 1 | - | - | - | - |
| *Katalysator **K*** (Bismutcarboxylat, ca. 16w% Bi) | - | - | 3 | 3 | - | - | 1 | 1 | - | - |
| *Katalysator **K*** (Zirconiumoctoat) | - | - | - | - | - | - | - | - | 1 | - |
| *Katalysator **K*** (Zinkneodecanoat) | - | - | - | - | - | - | - | - | - | 3 |

| **Zusammen setzung** | **R1** | **R2** | **R3** | **E1** | **R4** | **R5** | **R6** | **E2** | **E3** | **E4** |
|---|---|---|---|---|---|---|---|---|---|---|
| Auspresskraft [N] | 1200 | 1450 | 1400 | 1110 | 1280 | 1680 | 1260 | 977 | 980 | 935 |
| Flammpunkt [°C] | Nge | Nge | 46 | 97 | 44 | 70 | 46 | 107 | Nge | Nge |
| Hautbildezeit [min] | 50 | 110 | 6 | 44 | 200 | 180 | 180 | 240 | 360 | 270 |
| Härte Shore A (7d 23°C / 50% r.h.) | 16 | Nge | 21 | 21 | 19 | Nge | 9 | 23 | 12 | 9 |
| 100% Modul (Prüfkörper S2, 7d 23°C / 50% r.h.) [MPa] | 0.32 | Nge | 0.43 | 0.44 | 0.37 | Nge | 0.22 | 0.4 | 0.15 | 0.19 |
| Bruchdehnung (Prüfkörper S2, 7d 23°C / 50% r.h.) [%] | 567 | Nge | 633 | 571 | 623 | Nge | 920 | 618 | 1026 | 385 |

| | | | | | | | | | | |
|---|---|---|---|---|---|---|---|---|---|---|
| **Tabelle 2**: Messerwerte der erfinderischen Beispielzusammensetzungen (E1 bis E4) und der nicht erfinderischen Referenzzusammensetzungen (R1 bis R6). "Nge" bedeutet, dass der Wert nicht gemessen wurde. | | | | | | | | | | |

Die Messdaten aus Tabelle 2 zeigen deutlich, dass die erfindungsgemässen Silikonzusammensetzungen E1 bis E4 eine signifikant niedrigere Auspresskraft benötigen als die nicht erfindungsgemässen Referenzzusammensetzungen R1 bis R6. Ebenfalls weisen die erfindungsgemässen Zusammensetzungen E1 und E2 wesentlich höhere Flammpunkte auf als die gemessenen Referenzzusammensetzungen R3 bis R6.

### Beschreibung der Prüfmethoden

Die Methode zur Bestimmung der **Bruchdehnung** sowie des **E-Moduls (0-100%)** sowie die Herstellung der dazu benötigten Probekörper ist beschrieben in DIN 53504 / ISO 37. Gemessen wurde bei 23°C und 50% relativer Luftfeuchtigkeit (DIN 50014, Klasse 2) nach 7 Tagen Lagerung unter denselben Normbedingungen an einem Prüfkörper Typ S2 und mit einer Zuggeschwindigkeit von 200 mm/min.
Für die Bestimmung der **Auspresskraft** wurden die Zusammensetzungen in Kunststoffkartuschen gefüllt. Nach einer Konditionierung von 12 Stunden bei 23°C wurden die Kartuschen geöffnet und mittels eines Auspressgeräts ausgepresst. Dafür wurde eine Düse mit 3 mm Innendurchmesser auf die Kartusche aufgeschraubt. Mit einem Auspressgerät (Zwick/Roell Z005) wurde die Kraft bestimmt, die benötigt wurde, um die Zusammensetzung mit einer Auspressgeschwindigkeit von 60 mm/min auszupressen. Der angegebene Wert ist ein Mittelwert aus den Kräften, die nach einem Auspressweg von 22 mm, 24 mm, 26 mm und 28 mm gemessen wurde. Nach 30 mm Auspressweg wurde die Messung gestoppt.
**Flammpunkte** wurden auf einer Grabner Miniflash FLP-Anlage nach ASTM D6450 und ASTM D7094, in einem closed cup Verfahren, gemessen.
Die **Viskosität** wurde bestimmt nach DIN 53018.
Die **Hautbildungszeit** ("skin over time") als Mass für die Aushärtegeschwindigkeit wurde bei 23°C und 50% relativer Luftfeuchtigkeit bestimmt. Zur Bestimmung der Hautbildungszeit wurde ein kleiner Teil der raumtemperaturwarmen Zusammensetzung in einer Schichtdicke von ca. 2 mm auf Pappkarton aufgetragen und die Zeit bestimmt, die es dauerte, bis beim leichten Antippen der Oberfläche der Beschichtungsmasse mittels einer Pipette aus LDPE erstmals keine Rückstände auf der Pipette mehr zurückblieben.
Die **Shore A-Härte** wurde bestimmt nach DIN 53505.

## Patentansprüche

1. Silikonzusammensetzung umfassend
- mindestens ein kondensationsvernetzbares Polydiorganosiloxan **P** gemäss Formel (I), 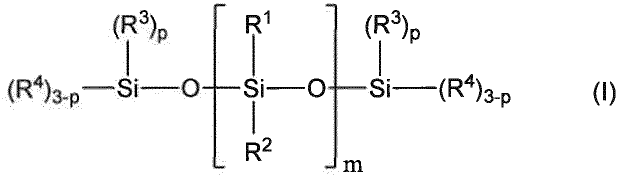 wobei
die Reste R¹, R² und R³ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen,
die Reste R⁴ unabhängig voneinander für Hydroxylgruppen oder für Amin-, Alkoxy-, Acetoxy- oder Ketoximgruppen mit jeweils 1 bis 13 C-Atomen stehen, welche gegebenenfalls ein oder mehrere weitere Heteroatome, und gegebenenfalls eine oder mehrere C-C-Mehrfachbindungen und/oder gegebenenfalls cycloaliphatische und/oder aromatische Anteile aufweisen,
der Index p für einen Wert von 0, 1 oder 2 steht; und
der Index m so gewählt ist, dass das Polydiorganosiloxan **P** bei einer Temperatur von 23°C eine Viskosität von 1000 bis 250'000 mPa·s aufweist;
- mindestens ein oligomeres Alkyl-, Alkenyl-, Aryl- oder organofunktionelles Siloxan **S** mit mindestens 2 oder 3 hydrolysierbaren Resten an mindestens einem Siliziumatom, das eine Viskosität bei einer Temperatur von 23°C von 1 bis 200 mPa.s aufweist;
- mindestens einen Katalysator **K** für die Vernetzung von Polydiorganosiloxanen, wobei der Katalysator **K** kein Titanat umfasst und mindestens eine Verbindung von Bi umfasst;
wobei die Viskosität nach DIN53018 bestimmt wird.

2. Silikonzusammensetzung gemäss Anspruch **1**, **dadurch gekennzeichnet, dass** die hydrolysierbaren Reste an mindestens einem Siliziumatom des mindestens einen oligomeren Siloxans **S** ausgewählt sind aus der Gruppe Acetoxy, Alkoxy, Oxim, Amin und Hydroxylamin und/oder bereits teilweise oder ganz hydrolysiert vorliegen.

3. Silikonzusammensetzung gemäss einem der vorhergehenden Ansprüche, **dadurch gekennzeichnet, dass** der mindestens eine Katalysator **K** in der Zusammensetzung enthalten ist mit einer Menge zwischen 0.1 und 6 Gewichtsteilen, bevorzugt zwischen 0.5 und 5 Gewichtsteilen, besonders bevorzugt zwischen 1 und 3 Gewichtsteilen, bezogen auf 100 Gewichtsteile Polydiorganosiloxan **P** der Zusammensetzung.

4. Silikonzusammensetzung gemäss einem der vorhergehenden Ansprüche, **dadurch gekennzeichnet, dass** das mindestens eine oligomere Siloxan **S** in der Zusammensetzung enthalten ist mit einer Menge zwischen 0.1 und 15 Gewichtsteilen, bevorzugt zwischen 0.5 und 10 Gewichtsteilen, besonders bevorzugt zwischen 1 und 8 Gewichtsteilen, bezogen auf 100 Gewichtsteile Polydiorganosiloxan **P** der Zusammensetzung.

5. Silikonzusammensetzung gemäss einem der vorhergehenden Ansprüche, **dadurch gekennzeichnet, dass** zusätzlich mindestens ein Füllstoff enthalten ist mit einem Anteil zwischen 1 Gew.-% und 80 Gew.-%, bevorzugt zwischen 2 Gew.-% und 60 Gew.-%, besonders bevorzugt zwischen 5 Gew.-% und 50 Gew.-%, bezogen auf das Gesamtgewicht der Silikonzusammensetzung.

6. Silikonzusammensetzung gemäss Anspruch 6, **dadurch gekennzeichnet, dass** der mindestens eine Füllstoff gemahlene Kreide und/oder Kieselsäure umfasst, wobei die Kreide bevorzugt eine BET-Oberfläche von 1 bis 10 m²/g und eine mittleren Teilchengrösse d50 von 1 bis 10 µm, die durch Laserlichtstreuung in Anlehnung an die Norm ISO 13320:2009 bestimmt wird, aufweist, und die Kieselsäure bevorzugt eine BET-Oberfläche von 50 bis 300 m²/g aufweist.

7. Silikonzusammensetzung gemäss einem der vorhergehenden Ansprüche, **dadurch gekennzeichnet, dass** zusätzlich Hilfsstoffe enthalten sind, ausgewählt aus der Gruppe Haftvermittler, Stabilisatoren, Pigmente, Weichmacher, Duftstoffe, Biozide, Thixotropiermittel, Phosphate und Radikalfänger, wobei mehrere oder alle davon enthalten sein können und jeder einzelne der zusätzlich enthaltenen Hilfsstoffe bevorzugt mit einem Anteil von weniger als 25 Gewichtsteilen, besonders bevorzugt weniger als 15 Gewichtsteilen, am meisten bevorzugt weniger als 10 Gewichtsteilen, bezogen auf 100 Gewichtsteile Polydiorganosiloxan **P** in der Zusammensetzung, enthalten ist.

8. Silikonzusammensetzung gemäss einem der Ansprüche 1 bis 8, **dadurch gekennzeichnet, dass** die Zusammensetzung eine einkomponentige Silikonzusammensetzung ist.

9. Silikonzusammensetzung gemäss Anspruch 9, **dadurch gekennzeichnet, dass** die Silikonzusammensetzung nach Lagerung während 12 h bei 23 °C in einer Kunststoffkartusche beim Auspressen durch eine Düse mit 3 mm Innendurchmesser und einer Auspressgeschwindigkeit von 60 mm/min eine Auspresskraft von zwischen 300 N und 1300 N, bevorzugt 400 N und 1200 N, besonders bevorzugt zwischen 500 N und 1000 N, benötigt.

10. Silikonzusammensetzung gemäss einem der Ansprüche **1** bis 8, **dadurch gekennzeichnet, dass** die Zusammensetzung eine zweikomponentige Silikonzusammensetzung ist bestehend aus einer Komponente **A** umfassend
- das mindestens eine kondensationsvernetzbare Polydiorganosiloxan **P**,
- bevorzugt mindestens eine Kieselsäure mit einer BET-Oberfläche von 50 bis 300 m²/g, sowie
- bevorzugt mindestens eine Kreide mit einer BET-Oberfläche von 1 bis 10 m²/g und einer mittleren Teilchengrösse d50 von 1 bis 10 µm; , die durch Laserlichtstreuung in Anlehnung an die Norm ISO 13320:2009 bestimmt wird, und einer Komponente **B** umfassend
- das mindestens eine oligomere Alkyl-, Alkenyl-, Aryl- oder organofunktionelle Siloxan **S**,
- den mindestens einen Katalysator **K**.

11. Silikonzusammensetzung gemäss Anspruch 11, **dadurch gekennzeichnet, dass** das Gewichtsverhältnis von Komponente **A** zu Komponente **B** ≥ 1:1, insbesondere von 3:1 bis 15:1, bevorzugt von 10:1 bis 13:1, beträgt.

12. Verwendung mindestens eines oligomeren Alkyl-, Alkenyl-, Aryl- oder organofunktionellen Siloxans **S** mit mindestens 2 oder 3 hydrolysierbaren Resten an mindestens einem Siliziumatom als Vernetzer in einer Silikonzusammensetzung in Kombination mit mindestens einem Katalysator **K** für die Vernetzung von Polydiorganosiloxanen, wobei der Katalysator **K** kein Titanat umfasst und mindestens eine Verbindung von Bi umfasst.

13. Verwendung einer Silikonzusammensetzung gemäss einem der Ansprüche 1 bis 12 als Klebstoff, Dichtstoff, Beschichtung oder Gussmasse.

14. Gehärtete Silikonzusammensetzung erhältlich aus einer Silikonzusammensetzung gemäss einem der Ansprüche 1 bis 12.

## Claims

1. Silicone composition comprising
- at least one condensation-crosslinkable polydiorganosiloxane **P** of formula (I), 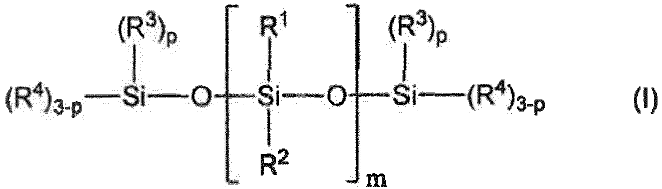 where
the radicals R¹, R² and R³ independently of one another are linear or branched, monovalent hydrocarbyl radicals having 1 to 12 carbon atoms, which optionally have one or more heteroatoms, and optionally have one or more C-C multiple bonds and/or optionally cycloaliphatic and/or aromatic fractions,
the radicals R⁴ independently of one another are hydroxyl groups or are amine, alkoxy, acetoxy or ketoxime groups having in each case 1 to 13 carbon atoms, which optionally have one or more further heteroatoms, and optionally have one or more C-C multiple bonds and/or optionally cycloaliphatic and/or aromatic fractions,
the index p stands for a value of 0, 1 or 2; and
the index m is selected such that at a temperature of 23°C the polydiorganosiloxane **P** has a viscosity of 1000 to 250000 mPa·s;
- at least one oligomeric alkyl-, alkenyl-, aryl- or organofunctional siloxane **S** having at least 2 or 3 hydrolysable radicals on at least one silicon atom, and having a viscosity at a temperature of 23°C of 1 to 200 mPa.s;
- at least one catalyst **K** for the crosslinking of polydiorganosiloxanes, the catalyst **K** comprising no titanate and comprising at least one compound of Bi;
the viscosity being determined according to DIN53018.

2. Silicone composition according to Claim 1, **characterized in that** the hydrolysable radicals on at least one silicon atom of the at least one oligomeric siloxane **S** are selected from the group of acetoxy, alkoxy, oxime, amine and hydroxylamine and/or are already partly or wholly hydrolysed.

3. Silicone composition according to either of the preceding claims, **characterized in that** the at least one catalyst **K** is present in the composition with an amount of between 0.1 and 6 parts by weight, preferably between 0.5 and 5 parts by weight, more preferably between 1 and 3 parts by weight, based on 100 parts by weight of polydiorganosiloxane **P** in the composition.

4. Silicone composition according to any of the preceding claims, **characterized in that** the at least one oligomeric siloxane **S** is present in the composition with an amount of between 0.1 and 15 parts by weight, preferably between 0.5 and 10 parts by weight, more preferably between 1 and 8 parts by weight, based on 100 parts by weight of polydiorganosiloxane **P** in the composition.

5. Silicone composition according to any of the preceding claims, **characterized in that** additionally there is at least one filler with a fraction of between 1 wt% and 80 wt%, preferably between 2 wt% and 60 wt%, more preferably between 5 wt% and 50 wt%, based on the total weight of the silicone composition.

6. Silicone composition according to Claim 6, **characterized in that** the at least one filler comprises ground chalk and/or silica, the chalk preferably having a BET surface area of 1 to 10 m²/g and an average particle size d50 of 1 to 10 µm as determined by laser light scattering in a method based on standard ISO 13320:2009, and the silica preferably has a BET surface area of 50 to 300 m²/g.

7. Silicone composition according to any of the preceding claims, **characterized in that** additionally auxiliaries are present selected from the group of adhesion promoters, stabilizers, pigments, plasticizers, fragrances, biocides, thixotropic agents, phosphates and radical scavengers, where two or more or all of them may be included, and each individual auxiliary of those additionally included is included preferably with a fraction of less than 25 parts by weight, more preferably less than 15 parts by weight, most preferably less than 10 parts by weight, based on 100 parts by weight of polydiorganosiloxane **P** in the composition.

8. Silicone composition according to any of Claims 1 to 8, **characterized in that** the composition is a one-component silicone composition.

9. Silicone composition according to Claim 9, **characterized in that** the silicone composition after storage for 12 h at 23°C in a plastic cartridge, on extrusion through a nozzle having an internal diameter of 3 mm at an extrusion velocity of 60 mm/min, requires an extrusion force of between 300 N and 1300 N, preferably 400 N and 1200 N, more preferably between 500 N and 1000 N.

10. Silicone composition according to any of Claims 1 to 8, **characterized in that** the composition is a two-component silicone composition, consisting of a component **A** comprising
- the at least one condensation-crosslinkable polydiorganosiloxane **P**,
- preferably at least one silica having a BET surface area of 50 to 300 m²/g, and also
- preferably at least one chalk having a BET surface area of 1 to 10 m²/g and an average particle size d50 of 1 to 10 µm as determined by laser light scattering in a method based on standard ISO 13320:2009,
and a component **B** comprising
- the at least one oligomeric alkyl-, alkenyl-, aryl- or organofunctional siloxane **S,**
- the at least one catalyst **K.**

11. Silicone composition according to Claim 11, **characterized in that** the weight ratio of component **A** to component **B** ≥ 1:1, more particularly from 3:1 to 15:1, preferably from 10:1 to 13:1.

12. Use of at least one oligomeric alkyl-, alkenyl-, aryl- or organofunctional siloxane **S** having at least 2 or 3 hydrolysable radicals on at least one silicon atom as crosslinker in a silicone composition in combination with at least one catalyst **K** for the crosslinking of polydiorganosiloxanes, the catalyst **K** comprising no titanate and comprising at least one compound of Bi.

13. Use of a silicone composition according to any of Claims 1 to 12 as adhesive, sealant, coating or casting compound.

14. Cured silicone composition obtainable from a silicone composition according to any of Claims 1 to 12.

## Revendications

1. Composition de silicone, comprenant
- au moins un polydiorganosiloxane P réticulable par condensation selon la formule (I), 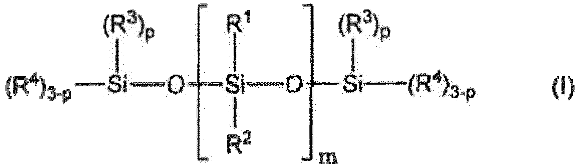 dans laquelle
les radicaux R¹, R² et R³ représentent, indépendamment les uns des autres, des radicaux hydrocarbonés linéaires ou ramifiés, monovalents, comprenant 1 à 12 atomes de carbone, qui présentent le cas échéant un ou plusieurs hétéroatomes et le cas échéant une ou plusieurs liaisons multiples C-C et/ou le cas échéant des proportions cycloaliphatiques et/ou aromatiques ;
les radicaux R⁴ représentent, indépendamment, des groupes hydroxyle ou des groupes amine, alcoxy, acétoxy ou cétoxime, comprenant à chaque fois 1 à 13 atomes de carbone, qui présentent le cas échéant un ou plusieurs autres hétéroatomes et le cas échéant une ou plusieurs liaisons multiples C-C et/ou le cas échéant des proportions cycloaliphatiques et/ou aromatiques ;
l'indice p vaut une valeur de 0, 1 ou 2 ; et
l'indice m est choisi de manière telle que le polydiorganosiloxane P, à une température de 23°C, présente une viscosité de 1000 à 250.000 mPa.s ;
- au moins un siloxane S oligomère à fonctionnalité alkyle, alcényle, aryle ou organofonctionnel comprenant au moins 2 ou 3 radicaux hydrolysables sur au moins un atome de silicium, qui présente une viscosité à une température de 23°C de 1 à 200 mPa.s ;
- au moins un catalyseur K pour la réticulation de polydiorganosiloxanes, le catalyseur K ne comprenant pas de titanate et comprenant en particulier un composé du Bi ;
la viscosité étant déterminée selon la norme DIN 53018.

2. Composition de silicone selon la revendication 1, **caractérisée en ce que** les radicaux hydrolysables sur au moins un atome de silicium dudit au moins un siloxane S oligomère sont choisis dans le groupe acétoxy, alcoxy, oxime, amine et hydroxylamine et/ou se trouvent déjà sous forme partiellement ou complètement hydrolysée.

3. Composition de silicone selon l'une quelconque des revendications précédentes, **caractérisée en ce que** ledit au moins un catalyseur K est contenu dans la composition en une quantité entre 0,1 et 6 parties en poids, de préférence entre 0,5 et 5 parties en poids, de manière particulièrement préférée entre 1 et 3 parties en poids, par rapport à 100 parties en poids de polydiorganosiloxane P de la composition.

4. Composition de silicone selon l'une quelconque des revendications précédentes, **caractérisée en ce que** ledit au moins un siloxane S oligomère est contenu dans la composition en une quantité entre 0,1 et 15 parties en poids, de préférence entre 0,5 et 10 parties en poids, de manière particulièrement préférée entre 1 et 8 parties en poids, par rapport à 100 parties en poids de polydiorganosiloxane P de la composition.

5. Composition de silicone selon l'une quelconque des revendications précédentes, **caractérisée en ce qu'**elle contient en outre au moins une charge, présentant une proportion entre 1% en poids et 80% en poids, de préférence entre 2% en poids et 60% en poids, de manière particulièrement préférée entre 5% en poids et 50% en poids, par rapport au poids total de la composition de silicone.

6. Composition de silicone selon la revendication 6, **caractérisée en ce que** ladite au moins une charge comprend de la craie et/ou de la silice broyée(s), la craie présentant de préférence une surface BET de 1 à 10 m²/g et une grosseur moyenne de particule d₅₀ de 1 à 10 µm, déterminée par diffusion de lumière laser selon la norme ISO 13320:2009, et la silice présentant une surface BET de 50 à 300 m²/g.

7. Composition de silicone selon l'une quelconque des revendications précédentes, **caractérisée en ce qu'**elle contient en outre des adjuvants, choisis dans le groupe formé par les promoteurs d'adhérence, les stabilisants, les pigments, les plastifiants, les parfums, les biocides, les agents thixotropique, les phosphates et les pièges de radicaux, plusieurs parmi ceux-ci ou l'ensemble de ceux-ci pouvant être contenus et chaque adjuvant individuel des adjuvants contenus en plus étant contenu en une proportion inférieure à 25 parties en poids, de manière particulièrement préférée inférieure à 15 parties en poids, le plus préférablement inférieure à 10 parties en poids, par rapport à 100 parties en poids de polydiorganosiloxane P dans la composition.

8. Composition de silicone selon l'une quelconque des revendications 1 à 8, **caractérisée en ce que** la composition est une composition de silicone à un composant.

9. Composition de silicone selon la revendication 9, **caractérisée en ce que** la composition de silicone, après stockage pendant 12 heures à 23°C dans une cartouche en matériau synthétique, lors de l'extrusion à travers une buse d'un diamètre interne de 3 mm et à une vitesse d'extrusion de 60 mm/min, nécessite une force d'extrusion entre 300 N et 1300 N, de préférence entre 400 N et 1200 N, de manière particulièrement préférée entre 500 N et 1000 N.

10. Composition de silicone selon l'une quelconque des revendications 1 à 8, **caractérisée en ce que** la composition est une composition de silicone à deux composants, constituée par un composant A comprenant
- ledit au moins un polydiorganosiloxane P réticulable par condensation,
- de préférence au moins une silice présentant une surface BET de 50 à 300 m²/g ainsi que
- de préférence au moins une craie présentant une surface BET de 1 à 10 m²/g et une grosseur moyenne de particule d₅₀ de 1 à 10 µm, déterminée par diffusion de lumière laser selon la norme ISO 13320:2009,
et un composant B comprenant
- ledit au moins un siloxane S oligomère à fonctionnalité alkyle, alcényle, aryle ou organofonctionnel,
- ledit au moins un catalyseur K.

11. Composition de silicone selon la revendication 11, **caractérisée en ce que** le rapport pondéral du composant A au composant B vaut ≥ 1:1, en particulier 3:1 à 15:1, de préférence 10:1 à 13:1.

12. Utilisation d'un siloxane S oligomère, à fonctionnalité alkyle, alcényle, aryle ou organofonctionnel, comprenant au moins 2 ou 3 radicaux hydrolysables sur au moins un atome de silicium comme réticulant dans une composition de silicone en combinaison avec au moins un catalyseur K pour la réticulation de polydiorganosiloxanes, le catalyseur K ne comprenant pas de titanate et comprenant au moins un composé du Bi.

13. Utilisation d'une composition de silicone selon l'une quelconque des revendications 1 à 12 comme adhésif, masse d'étanchéité, revêtement ou masse de coulage.

14. Composition de silicone durcie pouvant être obtenue à partir d'une composition de silicone selon l'une quelconque des revendications 1 à 12.
